# FASCICULE DE BREVET EUROPEEN

(11) **EP 0 588 713 B1**
(45) Date de publication et mention de la délivrance du brevet: **17.02.1999**
(21) Numéro de dépôt: 93402241.9
(22) Date de dépôt: 15.09.1993
(51) Int. Cl.: B23Q 1/00

(54) **Machine à fraiser, à surfacer et à polir, à changement automatique d'outils et dispositif correspondant**
Fräs-, Planfräs- und Polier-Maschine für automatischen Werkzeugwechsel und entsprechende Vorrichtung
Machine for grinding, facing and polishing for automatic tool changing and corresponding device

(30) Priorité: 18.09.1992 FR 9211141
(43) Date de publication de la demande: 23.03.1994
(73) Titulaire: THIBAUT S.A., F-14500 Vire (FR)
(72) Inventeur: Thibaut, Bernard, F-14500 Vire (FR)
(74) Mandataire: Boutin, Antoine

(56) Documents cités:
- EP-A- 0 074 452
- FR-A- 2 107 710

## Description

L'invention est relative à un dispositif de changement automatique d'outils correspondant (voir EP-A-74 452).

L'invention est particulièrement destinée au fraisage, au polissage et au surfaçage de pierres naturelles ou agglomérées, de blocs de béton, granit, marbre ou matériaux similaires.

On connaît des surfaceuses polisseuses à changement automatique d'outils, par exemple du type commercialisé par la Société de droit français THIBAUT sous la dénomination : T555.

Dans ce type de machine, l'accouplement de l'outil se fait en position centrale coaxiale à l'axe de rotation de l'outil au moyen d'une pièce appelée "pince de serrage" servant au serrage et à l'éjection de tiges à cônes à pentes rapides dans une tête de broche par l'intermédiaire d'un boulon de serrage, tandis que le positionnement de l'outil se fait par la coopération de pions solidaires de la tête de broche avec des douilles solidaires de l'outil.

Dans ces machines connues, la pièce centrale d'accouplement est peu visible et est entraînée en rotation simultanément avec l'outil : cette disposition ne permet pas la surveillance externe de l'accouplement d'un outil en train de tourner et grossit l'arbre de broche pour maintenir l'arrosage central.

Le document EP 074 452 décrit un perfectionnement aux têtes de fraisage comportant un corps dans lequel est monté rotative une broche porte-outil. Dans le corps de la tête de fraisage est monté rotatif et coulissant axialement sous l'action d'organes de commande un manchon dans lequel la broche est montée rotative. Ledit manchon comporte des organes de verrouillage à baïonnette coopérant avec des organes de verrouillage correspondants prévus sur le corps d'un accessoire.

Ledit corps présente sur sa face avant à sa périphérie et en dehors du manchon des moyens de positionnement et de centrage susceptibles d'être engagés avec des moyens correspondants prévus à la périphérie du coprs de l'accessoire.

Cette structure connue destinée à l'usinage des métaux ne présente pas la rigidité mécanique requise pour le traitement de pierres ou matériaux similaires, est sujette à encrassement et ne permet pas de surveiller en permanence le bon accouplement de l'outil en raison du fait que les moyens de fixation sont radialement intérieurs à l'assemblage constitue par la broche et le porte-outil.

Le document FR 2.107.710 décrit un dispositif de remplacement et d'alignement automatique de dispositif porte-outil, notamment de têtes de fraisage à fraise conique sur le chariot de fraisage d'une machine-outil. Dans ce dispositif, les moyens de fixation sont radialement intérieurs et ne peuvent être surveillés en permanence. En outre, la fixation par vissage dans tube taraudé central sujet à encrassement ne permet pas d'envisager l'utilisation de ce dispositif, pour le traitement de pierres ou de matériaux similaires.

L'invention a pour but de remédier aux inconvénients précités, en créant une nouvelle machine et un nouveau dispositif de changement automatique d'outils, permettant de surveiller en permanence le bon accouplement de l'outil.

L'invention a pour objet un dispositif de changement automatique d'outils pour machine à fraiser, à surfacer et à polir, du type comportant un coulisseau et une broche-porte-outil ; ledit dispositif comportant :
a) une première partie solidaire de la broche-porte-outil coopérant avec une deuxième partie d'entraînement solidaire de l'outil pour entraîner l'outil selon ou autour d'un axe (A-A),
b) une troisième partie fixe solidaire du coulisseau coopérant avec une quatrième partie de fixation et de serrage solidaire de l'outil en vue de leur solidarisation mutuelle,
   caractérisé en ce que la quatrième partie de fixation et de serrage solidaire de l'outil comporte une collerette ou conformation destinée au serrage située radialement extérieurement à partir de l'axe (A-A) et au moins deux doigts de centrage ou conformations en relief situés en position radialement intermédiaire, et en ce que la troisième partie fixe solidaire du coulisseau comporte un moyen de serrage hydraulique s'engageant et appuyant sous ladite collerette ou conformation de manière à entraîner l'outil vers la broche lors du serrage.

Selon des formes d'exécution de l'invention :
- la partie de fixation et de serrage solidaire de l'outil comporte trois doigts de centrage ou conformations en relief, de manière à réaliser un accolement de type plan sur plan et un appui parfait lors du serrage,
- la partie solidaire de la broche porte-outil et la partie d'entraînement solidaire de l'outil sont creuses de manière à permettre le passage d'un fluide hydraulique d'arrosage,
- la partie solidaire de la broche porte-outil comporte une couronne de crabotage, et la partie d'entraînement solidaire de l'outil un pignon de crabotage de forme correspondante.

Une forme de réalisation d'invention est aussi une machine à fraiser, à surfacer et à polir à changement automatique d'outils, du type comportant une broche d'entraînement pour entraîner un outil selon ou autour d'un axe (A-A), caractérisée en ce qu'elle comporte un dispositif de changement d'outil tel que défini ci-dessus.

Cette machine peut comporter une commande successive des moyens précités apte à approcher la broche en translation selon ledit axe (A-A) pour le centrage et l'immobilisation, puis pour l'engrènement des moyens d'entraînement, puis pour la fixation et le serrage de l'outil.

L'invention sera mieux comprise grâce à la description qui va suivre donnée à titre d'exemple non limitatif au regard des dessins annexés dans lesquels :
La figure 1 représente schématiquement une vue en perspective d'une machine selon l'invention.
La figure 2 représente schématiquement une vue en coupe radiale d'un dispositif selon l'invention avant accouplement de l'outil
La figure 3 représente schématiquement une vue en coupe radiale d'un dispositif selon l'invention portant un outil accouplé.

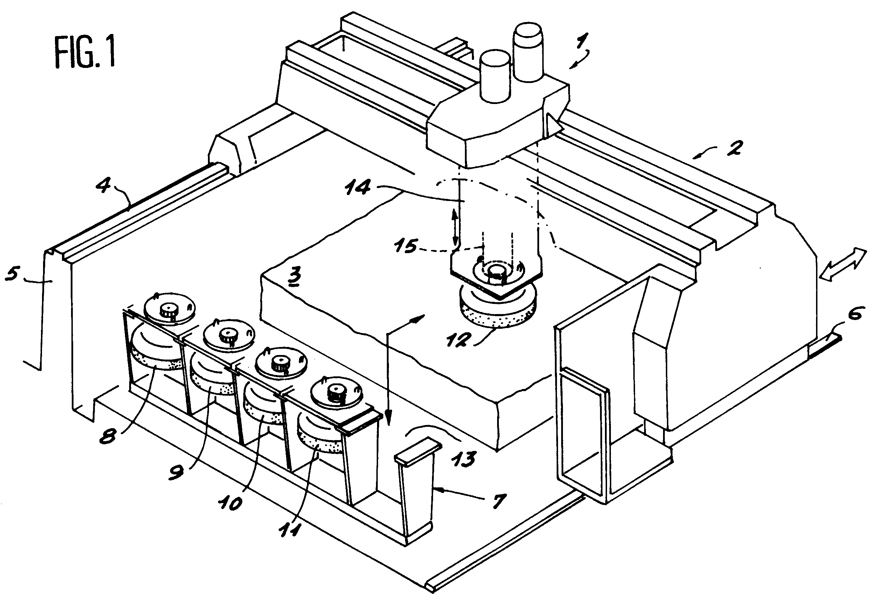

En référence à la figure 1, une machine à fraiser, à surfacer ou à polir selon l'invention comporte un chariot porte-outil 1 se déplaçant sur un portique 2 enjambant l'emplacement de pierres 3 à travailler et se déplaçant sur un chemin surélevé constitué par un rail 4 fixé sur un muret 5 ainsi que sur un deuxième rail 6 ou chemin de roulement analogue situé au niveau du sol.

Généralement, l'entraînement du portique 2 se fait sur le rail surélevé 4 par un moyen d'entraînement connu, par exemple du type pignon et crémaillère.

A une extrémité de l'espace de travail, un magasin 7 supportant des outils 8, 9, 10, 11 et comportant par exemple cinq emplacements d'outils, tels que par exemple des meules de granulométries différentes.

La machine, équipée d'un outil 12 muni d'une ou plusieurs meules de polissage, accomplit l'opération de polissage sur le bloc 3 puis, grâce aux mouvements du portique et du chariot selon les deux axes de translation horizontaux sensiblement perpendiculaires de la machine, vient placer le chariot 1 à la verticale de l'emplacement libre 13.

Puis, par abaissement grâce à la translation verticale du coulisseau 14, la broche porte-outil 15 descend sensiblement jusqu'au contact de l'outil 12 avec l'emplacement 13.

L'ouverture du dispositif selon l'invention permet la libération de l'outil 12 à son emplacement 13.

La remontée du coulisseau 14 et de la broche porte-outil 15 et la translation du chariot pour placer la broche porte-outil 15 au-dessus d'un outil suivant, par exemple l'outil 8, permet alors la fermeture du dispositif selon l'invention au moyen des étapes suivantes :
- on descend lentement le coulisseau 14, de manière à permettre le centrage de l'outil 8 par rapport à la broche 15 à l'aide de moyens de positionnement du dispositif selon l'invention situés d'une part sur la broche 15 et d'autre part sur l'outil 8.
- on continue à descendre le coulisseau 14 jusqu'à engagement ou enclenchement de moyens d'entraînement du dispositif selon l'invention situés d'une part sur la broche 15 et d'autre part sur l'outil 8.
- après engagement ou enclenchement des moyens d'entraînement, on actionne ou on ferme des moyens d'accouplement ou de solidarisation du dispositif selon l'invention situés d'une part sur la broche 15 et d'autre part sur l'outil 8.

Selon l'invention, les moyens d'accouplement sont radialement extérieurs aux moyens d'entraînement, notamment dans le cas d'un entraînement en rotation.

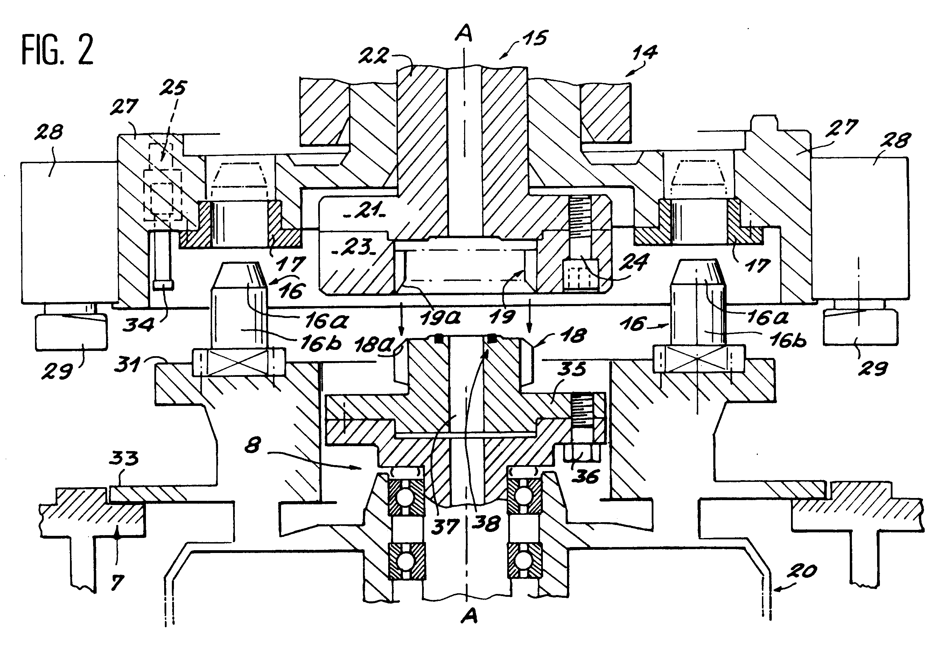

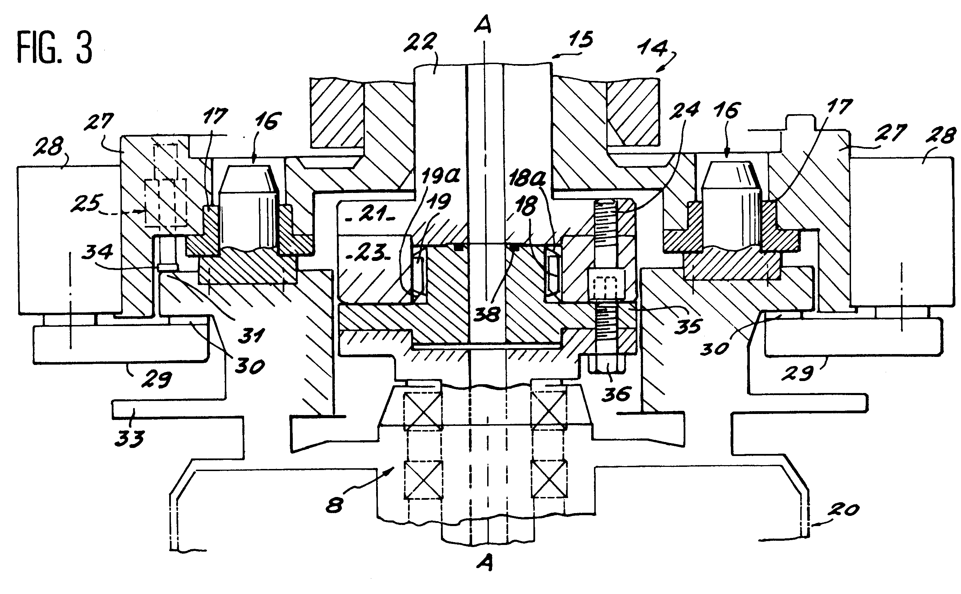

En référence aux figures 2 et 3, un mode de réalisation d'un dispositif selon l'invention est sensiblement symétrique radialement par rapport à l'axe AA.

Les moyens de positionnement comportent un ensemble solidaire de l'outil 8, comprenant au moins deux doigts de centrage 16 dont l'extrémité supérieure 16a est tronconique, et un ensemble solidaire de la broche porte-outil 15 comprenant au moins deux douilles 17 vissées ou montées fixes à l'extrémité du coulisseau 14, de manière à ce que au cours de la descente du coulisseau 14 le centrage de l'outil 8 soit automatiquement assuré par l'engagement des doigts 16 dans les douilles 17.

De préférence, les doigts de centrage 16 sont au nombre de trois et coopèrent avec trois douilles 17 correspondantes, de manière à réaliser un accolement plan sur plan et à obtenir un appui parfaitement équilibré lors du serrage.

Les moyens d'entraînement en rotation comportent, sur l'outil 8 et la broche porte-outil 15, un crabot extérieur 18 et un crabot intérieur 19.

Les dentures des crabots 18 et 19 présentent des conformations d'engrènement relatif ainsi que des entrées de dents 18a et 19a taillées en biseau de manière à provoquer l'engagement des dents du pignon dans celles de la couronne par relation de la broche.

Après l'alignement et l'engrènement des deux couronnes de crabotage 18 et 19, le mouvement de rotation autour de l'axe A-A est directement transmis à la meule 20 qui constitue la pièce travaillante de l'outil 8. La fonction d'entraînement en rotation est ainsi totalement indépendante de la fonction de centrage et de la fonction d'accouplement du dispositif selon l'invention.

Le dispositif selon l'invention est partie intégrante d'une machine selon l'invention : par conséquent, dans ce cas l'étude du dispositif et de la machine est faite simultanément dès l'origine de la phase de conception.

Cependant, l'invention concerne également de manière avantageuse les dispositifs adaptables sur des machines existantes, dans lesquelles le polissage d'une surface est obtenu par le passage de plusieurs meules (par exemple cinq) de granulométries différentes montées et démontées manuellement selon un ordre prédéterminé.

Ainsi, grâce à l'adaptation d'un dispositif selon l'invention, il est maintenant possible d'effectuer un changement automatique d'outils sur des machines de l'art antérieur, par exemple des surfaceuses polisseuses à fixation manuelle d'outils fabriquées sous la dénomination : T501 par la Société de droit français THIBAUT.

A cet effet, on monte sur la bride inférieure 21 de l'arbre de broche 22 la couronne 23 munie d'un crabotage intérieur au moyen de vis de fixation 24, et on monte également à la partie inférieure du coulisseau 14 une embase 25 au moyen de vis appropriées.

L'embase 25 supporte trois douilles fixes 17 de centrage coopérant avec des doigts solidaires de l'outil à monter préalablement au serrage, de manière à immobiliser et centrer l'outil

Sur le côté de l'embase 25 et généralement en position radialement extérieure par rapport à l'axe A-A, on monte au moyen d'équerres 27 rapportées par vis des vérins ou blocs de serrage hydraulique 28 qui ont pour fonction de faire pivoter d'un quart de tour des moyens de serrage 29 entre une première position sensiblement tangente à un cylindre d'axe A-A et une deuxième position sensiblement radiale par rapport à l'axe A-A.

Les moyens de serrage 29 sont de préférence des taquets de forte épaisseur munis chacun d'un plot circulaire 30 d'appui et de soulèvement : ces taquets sont solidaires de la tige du vérin qui monte et descend et pivote de 90°.

Sur l'outil ou la meule 8 de l'art antérieur, on monte un ensemble comportant une partie fixe solidarisable au coulisseau 14 et une partie montée à rotation sur l'arbre central de l'outil apte à être entraînée par l'arbre de broche 21 par l'intermédiaire des couronnes de crabotage 18 et 19.

La partie fixe solidarisable au coulisseau 14 comporte une collerette 31 de maintien usinée dans une plaque de forte épaisseur selon par exemple un contour circulaire ou autre, un nombre de doigts de centrage 16, correspondant aux douilles 17 de centrage précitées, et éventuellement une collerette inférieure 33 limitant la descente au contact de l'outil et assurant l'appui sur l'emplacement correspondant du magasin 7.

Un détecteur de proximité 34 indique la présence d'un outil sur la machine.

En position radialement intérieure, on monte à rotation par l'intermédiaire d'un couple de roulements l'outil 8, sur la bride duquel on monte un pignon de crabotage extérieur 35 par l'intermédiaire de vis dépassantes 36.

Avantageusement, l'arbre porte-broche 21 et l'outil 8 sont creux intérieurement pour permettre un arrosage central important et bien réparti. Selon l'invention, les couronnes de crabotage extérieur 23 et intérieur 35 sont également creuses et comportent par exemple un perçage central 37 pour le passage d'un débit abondant de fluide d'arrosage. Le perçage central est entouré d'un joint d'étanchéité 38 correspondant, de préférence solidaire du pignon de crabotage extérieur 35.

Par rapport aux machines connues à changement automatique d'outil et à fixation centrale, le débit d'arrosage est considérablement augmenté et n'est aucunement diminué par rapport aux machines à fixation manuelle de l'art antérieur, sans modification de l'arbre de broche.

De plus, le diamètre important des couronnes de crabotage 23 et 35 permet la transmission de couples importants, très supérieurs aux performances des machines connues.

Le fonctionnement décrit en référence à la figure 1 peut, selon une variante avantageuse, comporter l'étape suivante : après la descente verticale correspondant à l'immobilisation et au centrage par coopération des doigts 16 avec les douilles 17, puis à l'engrènement et la prise des couronnes de crabotage intérieur 35 et extérieur 23, un détecteur de proximité 34 indique la présence d'un outil. Les blocs hydrauliques 28 soumis à la pression hydraulique provoquent la fermeture du dispositif et le serrage de l'outil 8 sur la machine par l'intermédiaire des taquets 29 tournant d'un quart de tour vers une position radialement intérieure, soulevant et serrant simultanément l'outil 8 sur la broche porte-outil 21 et sur les douilles 17 de l'embase 25.

La machine est alors prête à l'usinage, et la fixation de l'outil est continuellement surveillée par le détecteur inductif ou indicateur de présence analogue 34 de manière à détecter la présence d'un outil sur la machine.

L'invention décrite pour des machines à arbre de broche vertical s'applique également à toute machine et magasin d'outils à axe incliné ou horizontal : l'essentiel est que, dans ces machines l'approche et la fixation de l'outil se fasse par simple translation puis rotation de moyens de fixation radialement extérieurs à l'axe de l'outil, ces moyens de fixation étant conformés pour entraîner l'outil vers la broche lors du serrage.

## Revendications

1. Dispositif de changement automatique d'outils pour machine à fraiser, à surfacer et à polir, du type comportant un coulisseau (14) et une broche-porte-outil (15); ledit dispositif comportant :
a) une première partie solidaire (23) de la broche-porte-outil (15) coopérant avec une deuxième partie d'entraînement (35) solidaire de l'outil (8) pour entraîner l'outil (8) sel on ou autour d'un axe (A-A),
b) une troisième partie fixe (17) solidaire du coulisseau (14) coopérant avec une quatrième partie (16, 31) de fixation et de serrage solidaire de l'outil (8) en vue de leur solidarisation mutuelle,
caractérisé en ce que la quatrième partie (16, 31) de fixation et de serrage solidaire de l'outil (8) comporte une collerette ou conformation (31) destinée au serrage située radialement extérieurement à partir de l'axe (A-A) et au moins deux doigts de centrage ou conformations en relief (16) situés en position radialement intermédiaire, et en ce que la troisième partie fixe solidaire du coulisseau (14) comporte un moyen de serrage hydraulique (28) s'engageant et appuyant sous ladite collerette ou conformation (31), de manière à entraîner l'outil (8) vers la broche (15) lors du serrage.

2. Dispositif selon la revendication 1, caractérisé en ce que la partie de fixation et de serrage solidaire de l'outil (8) comporte trois doigts de centrage ou conformations (16) en relief, de manière à réaliser un accolement de type plan sur plan et un appui parfait lors du serrage.

3. Dispositif selon la revendication 1 ou 2, caractérisé en ce que la partie solidaire (23) de la broche porte-outil (15) et la partie d'entraînement (35) solidaire de l'outil (8) sont creuses de manière à permettre le passage d'un fluide hydraulique d'arrosage.

4. Dispositif selon l'une quelconque des revendications précédentes, caractérisé en ce que la partie solidaire de la broche porte-outil (15) comporte une couronne de crabotage (19), et le partie d'entraînement solidaire de l'outil (8) un pignon de crabotage (18) de forme correspondante.

5. Machine à fraiser, à surfacer et à polir à changement automatique d'outils, du type comportant une broche d'entraînement pour entraîner un outil selon ou autour d'un axe (A-A), caractérisée en ce qu'elle comporte un dispositif de changement d'outil suivant l'une quelconque des revendications 1 à 4.

6. Machine selon la revendication 5, caractérisée en ce que la machine comporte une commande successive des moyens précités apte à approcher la broche en translation selon ledit axe (A-A) pour le centrage et l'immobilisation (16,17), puis pour l'engrènement des moyens d'entraînement (18,19), puis pour la fixation et le serrage de l'outil (29,31).

## Claims

1. Automatic tool changing device for a grinding, facing and polishing machine of the type comprising a sliding block (14) and a tool holder spindle (15); said device comprising:
a) a first part (23) connected with the tool holder spindle (15) co-operating with a second driving part (35) connected with the tool (8) for driving the tool (8) according to or around an axis (A-A),
b) a third fixed part (17) connected with the sliding block (14) co-operating with a fourth part (16, 31) for firmly securing and clamping the tool (8) in respect of their mutual interdependence,
characterised in that the fourth part (16, 31) for firmly securing and clamping the tool (8) comprises a flange or shaping (31) designed for clamping located radially outside from the axis (A-A), and at least two centring fingers or raised shapings (16) situated in a radially middle position, and in that the third fixed part connected with the sliding block (14) comprises a hydraulic clamping means (28) engaging and abutting under the said flange or shaping (31), in such a way as to drive the tool (8) towards the spindle (15) at the time of clamping.

2. Device according to claim 1, characterised in that the part for firmly securing and clamping the tool (8) comprises three centring fingers or raised shapings (16), in such a way as to form an attachment of the plane on plane type and a perfect support at the time of clamping.

3. Device according to claim 1 or 2, characterised in that the section (23) connected with the tool holder spindle (15) and the driving part (35) connected with the tool (8) are hollow so as to permit the passage of a hydraulic spraying fluid.

4. Device according to any one of the preceding claims, characterised in that the part connected with the tool holder spindle (15) comprises a claw coupling ring (19) and the driving part connected with the tool (8) a claw coupling pinion (18) of corresponding shape.

5. Grinding, facing and polishing machine for automatic tool changing, of the type comprising a driving spindle for driving a tool according to or around an axis (A-A), characterised in that it comprises a device for tool changing in accordance with any one of claims 1 to 4.

6. Machine according to claim 5, characterised in that the machine comprises a series control of the aforementioned means suitable for advancing the spindle in translation according to the said axis (A-A) for the centring and immobilising (16, 17), then for the meshing of the driving means (18, 19), then for the securing and clamping of the tool (29, 31).

## Patentansprüche

1. Fräs-, Planfräs- und Polier-Maschine für automatischen Werkzeugwechsel, die eine Führungsbuchse (14) und eine Werkzeughalterspindel (15) aufweist, mit folgenden Merkmalen:
a) ein erster fest an der Werkzeughalterspindel (15) angeordneter Teil arbeitet mit einem zweiten fest mit dem Werkzeug (8) verbundenen Antriebsteil (35) zusammen, um das Werkzeug (8) um eine Achse (A-A) drehend anzutreiben,
b) ein dritter, fest mit der Führungsbuchse (14) verbundener Teil (17) arbeitet mit einem vierten, der Befestigung und dem Festspannen dienenden Teil (16, 31) des Werkzeugs (8) im Sinne ihrer gegenseitigen Verbindung zusammen,
**dadurch gekennzeichnet,** daß der vierte, der Befestigung und dem Festspannen dienende Teil (16, 31) des Werkzeugs (8) einen Kragen oder eine zum Festspannen geeignete Gestaltung (31) aufweist, die radial außen zu der Achse (A-A) angeordnet ist und mindestens zwei Zentrierzapfen oder reliefartige Formgebungen (16) aufweist, die in einer radialen Zwischenposition vorgesehen sind, und daß der dritte, fest mit der Führungsbuchse (14) verbundene Teil ein hydraulisches Spannelement (28) aufweist, das mit dem Kragen oder der Gestaltung (31) in Wirkverbindung tritt und diese so untergreift, daß das Werkzeug (8) während des Festspannens gegen die Werkzeughalterspindel (15) gedrückt wird.

2. Vorrichtung nach Anspruch 1, **dadurch gekennzeichnet,** daß der der Befestigung und dem Festspannen dienenden Teil des Werkzeugs (8) drei Zentrierzapfen oder reliefartige Formgebungen (16) aufweist, die eine ebene Auflage und perfekte Anlage während des Festspannens ermöglichen.

3. Vorrichtung nach Anspruch 1 oder 2, **dadurch gekennzeichnet,** daß der fest an der Werkzeughalterspindel (15) angeordnete Teil (23) und der fest mit dem Werkzeug (8) verbundene Antriebsteil (35) hohl ausgebildet sind, um den Durchtritt eines Kühlmittels zu ermöglichen.

4. Vorrichtung nach einem der vorangehenden Ansprüche, **dadurch gekennzeichnet,** daß der fest an der Werkzeughalterspindel (15) angeordnete Teil eine Spindelkrone (19) und der fest mit dem Werkzeug (8) verbundene Antriebsteil eine korrespondierende Spindelkrone (18) aufweisen.

5. Fräs-, Planfräs- und Polier-Maschine für automatischen Werkzeugwechsel, die eine Werkzeughalterspindel für den Antrieb eines Werkzeugs entlang oder um eine Achse (A-A) aufweist, **dadurch gekennzeichnet,** daß sie eine Einrichtung für den Werkzeugwechsel nach einem der Ansprüche 1 bis 4 aufweist.

6. Maschine nach Anspruch 5, **dadurch gekennzeichnet,** daß die Maschine eine Folgebetätigung der vorerwähnten Elemente aufweist, die für eine translatorische Annäherung der Spindel entlang der Achse (A-A) zum Zwecke der Zentrierung und der Festlegung (16, 17), dann für den Eingriff der Antriebselemente (18, 19) und dann für die Befestigung und das Festspannen des Werkzeugs (29, 31) geeignet ist.
